# EUROPEAN PATENT APPLICATION

(11) **EP 3 795 951 A1**
(43) Date of publication of application: **24.03.2021**
(21) Application number: 19803407.6
(22) Date of filing: 18.01.2019
(51) Int. Cl.: G01C 21/30, G01C 21/26, G01S 19/40, G08G 1/137

(54) **NAVIGATION DEVICE, CONTROL METHOD, AND PROGRAM**

(30) Priority: 16.05.2018 JP 2018094327; 16.05.2018 JP 2018094328
(71) Applicant: JVCKenwood Corporation, Yokohama-shi, Kanagawa 2210022 (JP)
(72) Inventor: OKANIWA Kanichi, Yokohama-shi, Kanagawa 221-0022 (JP)
(74) Representative: Potter Clarkson
(86) International application number: PCT/JP2019/001394
(87) International publication number: WO 2019/220687

(57) **Abstract**

A navigation device according to this embodiment includes a position information acquisition unit (111) that acquires a subject vehicle position based on a positioning signal from a satellite, an estimation accuracy determination unit (112) that determines whether estimation accuracy of the subject vehicle position in the position information acquisition unit (111) is low, a specifying unit (115) that specifies a changed position where a user can determine the subject vehicle position on a map based on a travel road and a moving direction of the subject vehicle on map information, and a display control unit (116) that changes a display position of the subject vehicle on the map information so as to indicate the changed position.

## Description

### Technical Field

The present invention relates to a navigation device, a control method, and a program.

### Background Art

Patent Literature 1 discloses an in-vehicle device that measures a subject vehicle position by using GPS and autonomous navigation. This in-vehicle device detects a blind area where GPS signals are not receivable, such as in a tunnel. Further, the in-vehicle device monitors the GPS satellite acquisition status. During a period when there is no GPS satellite acquisition, the device calculates an automatic distance by autonomous navigation and corrects the on-screen position of the subject vehicle that has passed through the blind area based on the distance of the blind area on the map.

### Citation List

### Patent Literature

PTL1: Japanese Unexamined Patent Application Publication No. 2010-175323

### Summary of Invention

Navigation using a mobile terminal such as a smartphone or a tablet PC is used today. In a mobile terminal such as a smartphone or a tablet PC, it is not possible use a vehicle speed pulse (vehicle speed signal) from a vehicle. In a portable navigation device also, it is not possible to use a vehicle speed pulse in some cases. Further, even in a navigation device mounted on a vehicle, there is a case where it is not possible to acquire a vehicle speed pulse when it an imported vehicle or the like.

In a navigation device that cannot use a vehicle speed pulse, there is a possibility that the position of the subject vehicle cannot be displayed adequately when GPS signals cannot be received. For example, when driving in a tunnel or near a tall building, GPS signals cannot be acquired adequately, and therefore the subject vehicle position is displayed out of position.

The present disclosure has been accomplished in view of the above-described circumstances, and it provides a navigation device, a display control method, and a program capable of adequately displaying a subject vehicle position.

A navigation device according to this embodiment includes a position information acquisition unit configured to acquire a position of a subject vehicle based on a positioning signal from a satellite, an estimation accuracy determination unit configured to determine whether estimation accuracy of the position of the subject vehicle in the position information acquisition unit is low, a specifying unit configured to specify a changed position based on a travel road and a moving direction of the subject vehicle on map information, the changed position being a temporary current position in the moving direction of the subject vehicle, and a display control unit configured to change a display position of the subject vehicle on the map information so as to indicate the changed position when it is determined that the estimation accuracy is low.

A navigation device control method according to this embodiment includes a step of acquiring a position of a subject vehicle based on a positioning signal from a satellite, a step of determining whether estimation accuracy of the position of the subject vehicle is low, a step of specifying a changed position being a temporary current position in a moving direction of the subject vehicle based on a travel road and a moving direction of the subject vehicle on map information, and a step of changing a display position of the subject vehicle on the map information so as to indicate the changed position when it is determined that the estimation accuracy is low.

A program according to this embodiment causes a computer to execute a step of acquiring a position of a subject vehicle based on a positioning signal from a satellite, a step of determining whether estimation accuracy of the position of the subject vehicle is low, a step of specifying a changed position being a temporary current position in a moving direction of the subject vehicle based on a travel road and a moving direction of the subject vehicle on map information, and a step of changing a display position of the subject vehicle on the map information so as to indicate the changed position when it is determined that the estimation accuracy is low.

According to this embodiment, it is possible to provide a navigation device, a display control method, and a program capable of adequately displaying a subject vehicle position.

### Brief Description of Drawings

Fig. 1 is a functional block diagram showing the configuration of a navigation device.
Fig. 2 is a view showing an example of going through a tunnel.
Fig. 3 is a view illustrating an example 1 of a changed position.
Fig. 4 is a view illustrating an example 2 of a changed position.
Fig. 5 is a view illustrating an example 3 of a changed position.
Fig. 6 is a view illustrating an example 4 of a changed position.

### Description of Embodiments

Specific embodiments of the present invention are described hereinafter in detail with reference to the drawings. The present disclosure, however, is not limited to the below-descried embodiments. The following description and the attached drawings are appropriately shortened and simplified to clarify the explanation.

A navigation device according to this embodiment estimates the position of a subject vehicle by using positioning signals from satellites only. In other words, the navigation device according to this embodiment estimates the subject vehicle position without using a vehicle speed pulse. The navigation device according to this embodiment is a navigation device without using autonomous navigation.

The positioning signal is a GPS signal from a GPS (Global Positioning System) satellite, for example. A satellite positioning system other than GPS, such as a quasi-zenith satellite system, for example, may be used as a matter of course. In the following description, a navigation device that acquires a subject vehicle position only by GPS navigation using GPS signals is described.

The navigation device and its control method according to this embodiment can be typically implemented by a mobile terminal such as a smartphone or a tablet PC. Specifically, a mobile terminal in which a navigation application (application program) is installed serves as the navigation device. Alternatively, they may be implemented by a portable navigation device. Further, the navigation device may be an in-vehicle navigation device mounted on an imported vehicle or the like that cannot use a vehicle speed pulse. This navigation device is used without being connected to a CAN (Controller Area Network) or the like.

### First Embodiment

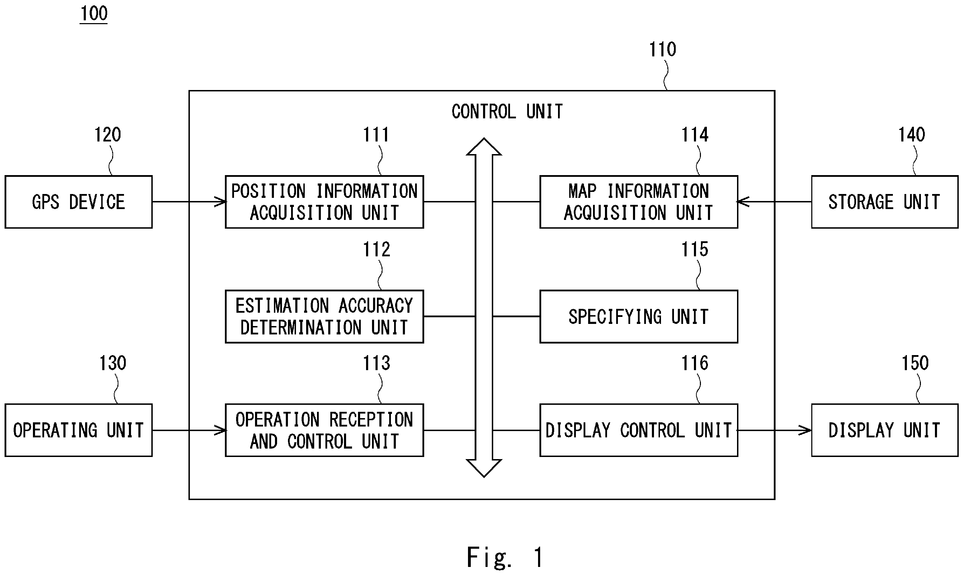

Fig. 1 is a functional block diagram showing the configuration of a navigation device 100 according to this embodiment. The navigation device 100 includes a control unit 110, a GPS device 120, an operating unit 130, a storage unit 140, and a display unit 150.

The control unit 110 includes a position information acquisition unit 111, an estimation accuracy determination unit 112, an operation reception and control unit 113, a map information acquisition unit 114, a specifying unit 115, and a display control unit 116. The control unit 110 is composed of a memory that stores a program, and a processor such as a CPU (Central Processing Unit). This processor executes a program, and thereby processing in each functional block is performed.

The GPS device 120 includes an antenna, a receiving circuit and the like. The GPS device 120 receives GPS signals from a plurality of artificial satellites. The GPS device 120 performs processing such as amplification, A/D conversion and demodulation on the GPS signals. The GPS device 120 outputs the processed GPS signals to the position information acquisition unit 111. The position information acquisition unit 111 acquires position information about the current subject vehicle position based on the GPS signals.

The position information of the subject vehicle position includes, for example, a latitude, a longitude and the like. The position information may further include an altitude. Note that a method of calculating a latitude, a longitude and the like using GPS signals is known, and therefore the detailed description thereof is omitted. The GPS device 120 and the position information acquisition unit 111 may cooperate with each other to calculate the current position of the subject vehicle based on GPS signals. The GPS device 120 repeatedly receives GPS signals. The position information acquisition unit 111 updates the current subject vehicle position based on the latest GPS signal. In other words, the position information acquisition unit 111 estimates the latest subject vehicle position.

The estimation accuracy determination unit 112 determines the estimation accuracy of the subject vehicle position acquired by the position information acquisition unit 111. Specifically, the estimation accuracy determination unit 112 determines whether the estimation accuracy of the subject vehicle position acquired by the position information acquisition unit 111 is high or not. For example, the estimation accuracy determination unit 112 determines the estimation accuracy in accordance with the number of received GPS signals.

For a specific example, when the GPS device 120 receives GPS signals from four or more GPS satellites, the estimation accuracy determination unit 112 determines that the estimation accuracy is high. When the GPS device 120 receives GPS signals from three GPS satellites or less, the estimation accuracy determination unit 112 determines that the estimation accuracy is low. Thus, the position information estimated based on three GPS signals has low estimation accuracy, and the position information estimated based on four GPS signals has high estimation accuracy. When the subject vehicle passes through a tunnel or high-rise buildings, the GPS device 120 cannot receive GPS signals adequately. Consequently, the estimation accuracy of the subject vehicle position decreases, and the subject vehicle position is significantly displaced.

The estimation accuracy determination unit 112 may determine whether the estimation accuracy of the subject vehicle position is high or not based on map information acquired by the map information acquisition unit 114. For example, it determines whether the estimation accuracy of the subject vehicle position is high or not when the subject vehicle position has passed through a tunnel entrance based on determination that there is an area where GPS signals cannot be received adequately, such as a tunnel, in the moving direction by use of the subject vehicle position and the map information. Further, information indicating an area where GPS signals cannot be received adequately may be acquired together with the map information.

The operating unit 130 includes an input device such as an operating panel or a remote control, for example. The operating unit 130 may be a touch panel integrated with the display unit 150. Alternatively, the operating unit 130 may include a microphone for voice input operation. The operating unit 130 receives a navigation operation of a user. For example, a user may use the operating unit 130 to input a destination, start search for a route to a destination, zoom in and out on a map, scroll a map, input a change of display setting and the like. The operating unit 130 outputs an operation signal in accordance with user operation to the operation reception and control unit 113.

The operation reception and control unit 113 causes the navigation device 100 to perform processing in accordance with the operation signal from the operating unit 130. The navigation device 100 thereby performs processing such as route search. The operating unit 130 and the operation reception and control unit 113 cooperate with each other to perform processing in accordance with user operation. The navigation device 100 thereby performs processing in accordance with user operation.

The storage unit 140 includes a recording medium such as a hard disk and a memory, and stores map information necessary for navigation. Note that, when the navigation device 100 is a smartphone or the like, the storage unit 140 may have a structure that temporarily stores map information received from an external server.

The map information contains path computation data, road data, background data and the like. The path computation data is data to be used for searching for a route to a destination or the like. The road data is data indicating the shape, type, width and the like of roads. The minimum unit of each road in the map information is called a link. Thus, each road is composed of a plurality of links in the map information. Adjacent links are connected through a point called a node, and the node indicates the end point of a link. The node corresponds to a branch point such as an intersection.

The background data is data indicating the background of a map. The background of a map means various elements other than roads existing on the map. For example, rivers, railroads, green spaces, various structures and the like are represented by the background data. The background data contains information of objects existing near each branch point and road. The objects include artificial structures such as building, tunnels, parks and facilities, for example. Further, the objects include natural objects such as rivers, lakes, forests and mountains. Those object information contain position coordinates and a three-dimensional shape (dimensions, orientation, appearance etc.), for example.

Further, the road data contains information about tunnels or the like where it is difficult to receive GPS signals. For example, the road data contains information about a tunnel exit, distance and the like. Further, when a tunnel has a branch, the road data contains information about the position and direction of the branch point and the distance from the entrance to the branch point. In addition, candidates for a changed position are registered in the map information. The changed position is a tunnel exit, a branch point and the like, for example. The changed position is described later.

The display unit 150 includes a display such as a liquid crystal monitor. The display control unit 116 controls display of the display unit 150. Specifically, the display control unit 116 generates a display control signal in accordance with an image to be displayed on the display unit 150. The display unit 150 then performs display based on the display control signal from the display control unit 116. The display control unit 116 and the display unit 150 cooperate with each other to display a map or the like necessary for navigation.

To be specific, the display control unit 116 and the display unit 150 display a map on the display based on the map information stored in the storage unit 140. Further, the display control unit 116 and the display unit 150 superimpose an icon indicating the current subject vehicle position on the map and display this map. The display control unit 116 and the display unit 150 scroll the displayed map as the subject vehicle position moves so that the icon of the subject vehicle position is always at a certain position such as the center of the display screen.

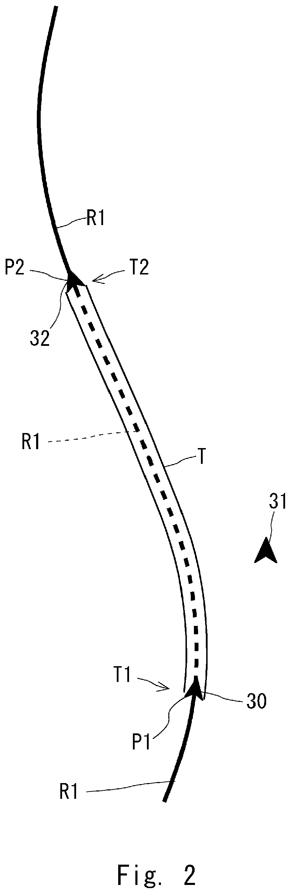

The specifying unit 115 specifies a changed position where the estimation accuracy is expected to be higher based on the travel road and the moving direction of the subject vehicle on the map information. The changed position is described in detail hereinafter with reference to Fig. 2. Fig. 2 is a view illustrating a change in the subject vehicle position on the display screen.

Fig. 2 shows the case where a travel road R1 has a tunnel T. Thus, Fig. 2 schematically shows a map in the case where the subject vehicle passes through the tunnel T. The vehicle travels from the bottom to the top in Fig. 2. The lower end of the tunnel T is an entrance T1, and the upper end is an exit T2. The positions of the entrance T1 and the exit T2 of the tunnel T are registered in the map information. The solid line part of the travel road R1 is an area where the estimation accuracy is high, and the dashed line part is an area where estimation accuracy is low.

At the timing when the subject vehicle enters the tunnel T, an icon 30 indicating the subject vehicle position is displayed at the entrance T1 of the tunnel T because the estimation accuracy is high. A display position of the icon 30 at the entrance T1 of the tunnel T is a display position P1. After the subject vehicle enters the tunnel T, the GPS device 120 cannot receive GPS signals from GPS satellites. It is difficult to receive GPS signals from the entrance T1 to the exit T2 of the tunnel T. While passing through the tunnel T, the estimation accuracy determination unit 112 determines that the estimation accuracy has become low. When it is determined that the estimation accuracy is low, the subject vehicle position acquired by the position information acquisition unit 111 is significantly displaced from the tunnel T as indicated by an icon 31 of the subject vehicle position in some cases.

In such cases, the specifying unit 115 specifies the exit T2 of the tunnel T as a changed position P2 based on the travel road R1 and the moving direction on the map information. Specifically, the specifying unit 115 specifies a candidate for the next changed position on the travel road R1 as the changed position P2. The display control unit 116 displays an icon 32 indicating the current subject vehicle position at the changed position P2. Specifically, the display control unit 116 performs display control so as to change the subject vehicle position from the display position P1 to the changed position P2. The display control unit 116 changes the display position of the subject vehicle so as to indicate the changed position P2. Thus, the icon is changed from the display position P1 to the changed position P2 on the display screen. The display control unit 116 displays the icon 32 indicating the subject vehicle position at the changed position P2 until the estimation accuracy by the estimation accuracy determination unit 112 becomes high. At this time, messages such as "passing through tunnel" and "waiting for receiving GPS signals" may be displayed on the display screen.

In this manner, it is possible to reduce the displacement of the icon at the timing when the subject vehicle has passed through the tunnel T. If the subject vehicle position acquired in the state where the estimation accuracy is low is indicated by the icon 31, the display position of the icon 32 is significantly changed at the timing when the estimation accuracy becomes high. To be specific, it is instantaneously switched from the icon 31 to the icon 32 on the display screen. This makes it difficult for a user (for example, a driver) to keep track of the subject vehicle position.

In view of the above, when the estimation accuracy becomes low, the icon 32 is displayed at the changed position where the estimation accuracy of the subject vehicle position is expected to become high. This prevents a sudden change of the display position of the icon at the timing when the estimation accuracy becomes high. It is thereby possible to adequately display the subject vehicle position on the map, which allows a user to easily keep track of the subject vehicle position. Particularly, there is a case where an element that needs attention, such as a branch point, an intersection or a sharp curve, is located in close proximity to the exit T2 of the tunnel T, which is, to be specific, immediately after passing through the exit T2 of the tunnel T or the like. While going through the tunnel T, the display range of the display screen is such that the changed position P2 is displayed at a certain position, e.g., at the center of the display screen, even when the exit T2 of the tunnel T is normally not displayed within the display range of the display screen, or even when the exit T2 of the tunnel T is not displayed within the display range of the display screen due to the displacement of the subject vehicle position such as the icon 31 of the subject vehicle position. A user can be thereby aware of an element that needs attention which is located near the exit T2 of the tunnel T, thereby avoiding a sudden reaction.

As described above, the changed position P2 is set as a temporary current position. In other words, an icon indicating the subject vehicle position is displayed at the changed position P2 while the estimation accuracy is low. For example, the map information contains the positions of the entrance T1 and the exit T2 of the tunnel T. In the map information, the entrance T1 and the exit T2 are registered as candidates for the changed position. Note that the entrance T1 and the exit T2 are interchanged depending on the moving direction of the subject vehicle.

The specifying unit 115 specifies the changed position from candidates for the changed position in accordance with the subject vehicle position and the moving direction acquired in the state where the estimation accuracy is high. For example, the specifying unit 115 specifies the changed position in advance before the estimation accuracy becomes low based on the travel road R1 and the moving direction of the subject vehicle. The specifying unit 115 can thereby specify an appropriate changed position. Then, when the estimation accuracy becomes low, the specifying unit 115 displays the icon at the changed position specified by the specifying unit 115. Because the estimation accuracy becomes low upon entering the tunnel T, the specifying unit 115 displays the icon at the tunnel exit T2 as the changed position P2. After the estimation accuracy becomes high upon exiting the tunnel T, the specifying unit 115 displays the icon at the subject vehicle position acquired by the position information acquisition unit 111.

Further, the changed position may be updated while the subject vehicle position is moving in the state where the estimation accuracy is high. In the case where there are a series of tunnels, the specifying unit 115 updates the changed position to the exit of the next tunnel each time the subject vehicle position goes through a tunnel. It is thereby possible to display the subject vehicle position adequately when going through a series of tunnels where the GPS signals are not receivable.

Further, the changed position P2 does not need to completely coincide with the exit T2 of the tunnel T. Specifically, the display position of the icon 32 indicating the current position of the subject vehicle may be anywhere near the exit T2. For example, the icon 32 may be displayed immediately before the exit T2 of the tunnel T.

### Second Embodiment

In the second embodiment, criteria for the changed position specified by the specifying unit 115 are different from those in the first embodiment. Processing performed in the elements other than the specifying unit 115 is the same as that in the first embodiment, and the description thereof is omitted.

In this embodiment, the specifying unit 115 specifies a changed position where a user can determine the subject vehicle position on a map. The changed position is a position where a user can recognize the subject vehicle position by visual check. For example, while driving through a tunnel, it is difficult for a user to determine at which position in the tunnel the vehicle is located. While going through the tunnel, when the subject vehicle is approaching the tunnel exit or passing through the tunnel exit, a user can visually recognize that it is immediately before the tunnel exit or it is at the tunnel exit. Therefore, a position immediately before the tunnel exit or at the tunnel exit is registered as a candidate for the changed position. The specifying unit 115 specifies the position immediately before the tunnel exit or at the tunnel exit as the changed position based on the travel road R1 and the moving direction.

In this manner, it is possible to reduce the displacement of the display position at the timing when the subject vehicle has passed through the tunnel. If the subject vehicle position acquired in the state where the estimation accuracy is low is indicated by an icon, the display position of the icon is significantly changed at the timing when the estimation accuracy becomes high. When the estimation accuracy becomes low, the icon is displayed at the changed position where a user can specify the subject vehicle position on a map, which prevents a sudden change of the display position of the icon. It is thereby possible to adequately display the subject vehicle position on the map, and a user can easily keep track of the subject vehicle position.

As described above, the exit T2 of the tunnel T where a user can visually recognize the subject vehicle position is set as a temporary current position (see Fig. 2). For example, the position information of the entrance T1 and the exit T2 of the tunnel T is contained in the map information. In the map information, the entrance T1 and the exit T2 are registered as candidates for the changed position. Note that the entrance T1 and the exit T2 are interchanged depending on the moving direction of the subject vehicle. The specifying unit 115 specifies the changed position in accordance with the current position and its moving direction acquired in the state where the estimation accuracy is high.

The specifying unit 115 specifies the changed position in accordance with the subject vehicle position and the moving direction acquired in the state where the estimation accuracy is high. Specifically, the specifying unit 115 specifies the changed position in advance based on the subject vehicle position and the moving direction before the estimation accuracy becomes low. The specifying unit 115 can thereby specify an appropriate changed position. Then, when the estimation accuracy becomes low, the specifying unit 115 displays the icon at the changed position specified by the specifying unit 115.

The specifying unit 115 specifies a changed position where a user can determine the subject vehicle position on a map. Further, the subject vehicle position may be updated when the subject vehicle position has shifted in the state where the estimation accuracy is high. For example, in the case where there are a series of tunnels, the specifying unit 115 updates the changed position to the exit of the next tunnel each time the subject vehicle position goes through a tunnel. It is thereby possible to display the subject vehicle position adequately when going through a tunnel where the GPS signals are not receivable.

Further, when a tunnel has a branch point, the specifying unit 115 may specify the branch point in the tunnel as the changed position. Specifically, when there is a branch point in a tunnel, a user can recognize that the vehicle is passing through the branch point. The specifying unit 115 specifies the branch point where a user can determine the subject vehicle position by visual check as the changed position. The display control unit 116 changes the display position of the subject vehicle so as to indicate the changed position.

Note that the first embodiment and the second embodiment may be appropriately combined. To be specific, both of a position where the estimation accuracy is expected to become high and a position where a user can determine the subject vehicle position on a map may be set as the changed position.

### (Example 1 of Changed Position)

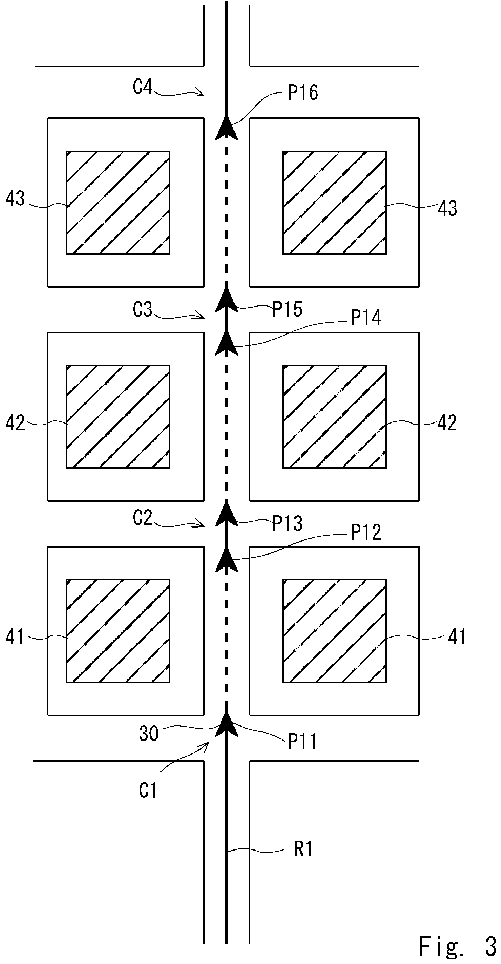

Although the exit of a tunnel is set as the changed position in the first and second embodiments, the changed position is not limited to the exit of a tunnel. An example of the changed position in the first and second embodiments is described hereinafter. Fig. 3 is a view schematically showing an example of going through an urban area with high-rise buildings. The example 1 shows an example of going straight on a road among buildings 41 to 43, which are high-rise buildings. There are intersections C1 to C4 among the high-rise buildings, and the subject vehicle sequentially passes through an intersection C1, an intersection C2, an intersection C3 and an intersection C4 in this order.

When GPS signals cannot be adequately received between two buildings 41, the estimation accuracy is low in the area between the intersection C1 and the intersection C2. On the other hand, at the intersection C1 and the intersection C2, the GPS device 120 can adequately receive GPS signals, and the estimation accuracy is high. The state where GPS signals cannot be adequately received is when the GPS device 120 receives GPS signals from three GPS satellites or less, for example, and the state where GPS signals can be adequately received is when the GPS device 120 receives GPS signals from four or more GPS satellites, for example. When the subject vehicle passes through a display position P11 and thereby the estimation accuracy becomes low, for example, the specifying unit 115 specifies the position of the intersection C2 as a changed position P12. Thus, an icon 30 indicating the subject vehicle position is shifted from the display position P11 to the changed position P12.

When the subject vehicle further goes straight ahead and has passed through the intersection C2, it comes between the buildings 42. When GPS signals cannot be adequately received between the buildings 42, the estimation accuracy is low in the area between the intersection C2 and the intersection C3. On the other hand, at the intersection C3, the GPS device 120 receives GPS signals, and therefore the estimation accuracy becomes high. When the subject vehicle passes through a display position P13 and thereby the estimation accuracy becomes low, the specifying unit 115 specifies the position of the intersection C3 as a changed position P14. Thus, the icon 30 indicating the subject vehicle position is shifted from the display position P13 to the changed position P14. When the subject vehicle further goes straight ahead and has passed through the intersection C3, it comes between the buildings 44. When GPS signals cannot be received between the buildings 43 also, the icon 30 indicating the subject vehicle position is shifted from a display position P15 to a changed position P16.

When the subject vehicle passes through the intersections C1 to C4, the specifying unit 115 sequentially specifies the changed position P12, the changed position P14 and the changed position P16. When the icon 30 indicating the subject vehicle position is displayed at the changed position in the state where the estimation accuracy is low, its display form may be different from the icon 30 in the state where the estimation accuracy is high.

In the example 1, the intersections C1 to C4 are registered as candidates for the changed position. In the first embodiment, the intersections C2 to C4 serve as the changed positions where the estimation accuracy of the subject vehicle position is expected to become high. In the second embodiment, the intersections C2 to C4 serve as the changed positions where a user can determine the subject vehicle position on a map. Then, after passing through the intersection C1, when GPS signal cannot be received and the estimation accuracy becomes low, the subject vehicle position is displayed at the changed position. It is thereby possible to adequately display the subject vehicle position and thereby allow a user to easily keep track of the subject vehicle position.

As described above, in the examples of the first and second embodiments, not only a tunnel exit but also an intersection can be a candidate for the changed position. As a matter of course, a branch point, not limited to an intersection, can be a candidate for the changed position. In other words, branch points such cross-shaped, T-shaped, and Y-shaped branch points can be candidates for the changed position.

### (Example 2 of Changed Position)

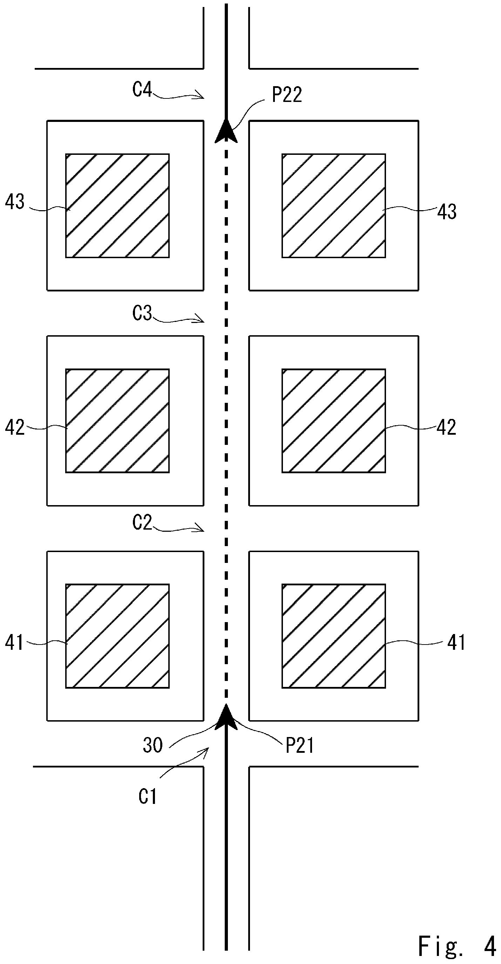

A changed position in an example 2 is described hereinafter with reference to Fig. 4. Fig. 4 also shows an example of going straight on a road among buildings 41 to 43, just like in the example 1. It is assumed that the GPS device 120 cannot adequately receive GPS signals in all areas from the intersection C1 to the intersection C4 in Fig. 4. In other words, the estimation accuracy is low also at the intersection C2 and the intersection C3, in addition to the area where the estimation accuracy becomes low in the example 1.

In the case where the subject vehicle passes through the intersections C1 to C4, when the subject vehicle passes through a display position P21 and thereby the estimation accuracy becomes low, the specifying unit 115 specifies a changed position P22. Thus, the icon 30 is displayed sequentially at a display position P21 and a display position P22. The icon 30 indicating the subject vehicle position is shifted from the display position P21 to the changed position P22.

In the example 2, the intersections C1 and C4 are registered as candidates for the changed position. In the first embodiment, the intersection C4 serves as the changed position where the estimation accuracy of the subject vehicle position is expected to become high. Then, after passing through the intersection C1, when GPS signal cannot be received and the estimation accuracy becomes low, the icon of the subject vehicle position is displayed at the changed position P22. It is thereby possible to adequately display the subject vehicle position, and a user can easily keep track of the subject vehicle position.

In the example 2, the fact that GPS signals cannot be received at the intersection C2 and the intersection C3 when passing through those intersections in the past is registered in passage history records. Specifically, the intersection C2 and the intersection C3 where the estimation accuracy becomes low are excluded from candidates for the changed position. When passing through the intersection C1, the specifying unit 115 refers to the past passage history records and specifies the intersection C4 as the changed position P22. In this manner, by excluding the intersection C2 and the intersection C3 where the estimation accuracy becomes low from candidates for the changed position, it is possible to adequately display the subject vehicle position on the map.

Note that passage history records indicating that GPS signals could not be received when vehicles other than the subject vehicle passed may be accumulated. Specifically, by referring to the passage history records of other vehicles, the areas where it is difficult to receive GPS signals may be excluded from candidates for the changed position. Generally, a place where GPS signals from GPS satellites cannot be received are determined by geographical features and the height of buildings. Therefore, when the GPS device of the navigation device could not receive GPS signals at the intersections C2 and C3, the intersections C2 and C3 are registered as places where the estimation accuracy becomes low. Thus, the intersections C2 and C3 are excluded from candidates for the changed position.

As described above, passage history records indicating whether a plurality of navigation devices could receive GPS signals or not are accumulated in a server. Then, candidates for the changed position may be eliminated by using the passage history records of a plurality of navigation devices. Specifically, intersections and the like where the estimation accuracy is expected to become low are excluded from candidates for the changed position. Further, the control unit 110 may has learning function and learn candidates for the changed position from map information, passage history records and the like.

Further, in the case where the changed position is a position where a user can determine the subject vehicle position on a map as described in the second embodiment, the specifying unit 115 specifies the changed position P12 and the changed position P14 in the same manner as in Fig. 3. Specifically, even when the estimation accuracy is low at the intersection C1 to the intersection C4, a user can visually recognize that the subject vehicle is located at the intersection. Thus, the specifying unit 115 may set the intersections C2 and C3 where the estimation accuracy is expected to become low as the changed position P12 and the changed position P14.

### (Example 3 of Changed Position)

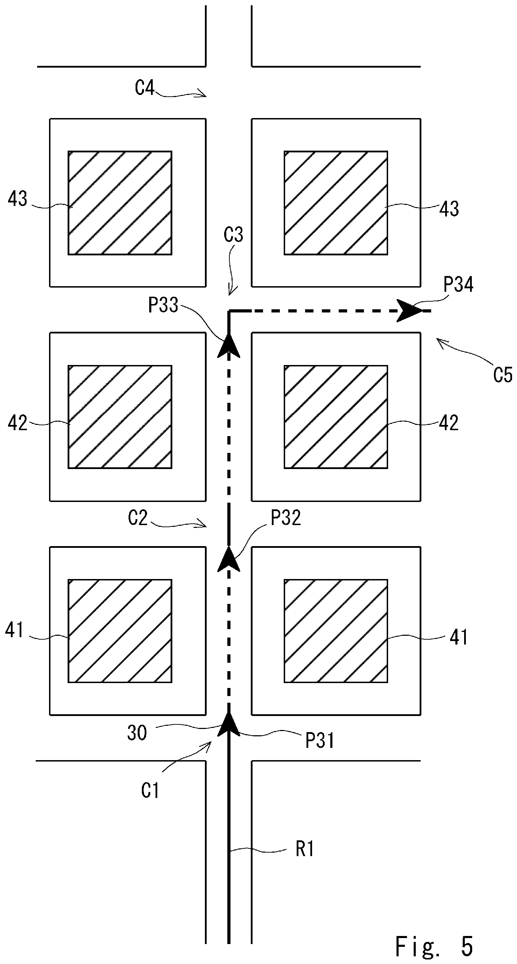

In an example 3, the specifying unit 115 specifies the changed position depending on a result of route search. Fig. 5 shows the example 3 in which the vehicle goes straight from the intersection C1 to the intersection C3 and turns right at the intersection C3. In other words, as a result of route search, a route that passes through the intersection C1, the intersection C2, the intersection C3 and the intersection C5 is registered.

When the estimation accuracy becomes high at the intersection C2 and the intersection C3 as in the example 1, the specifying unit 115 specifies the intersection C2, the intersection C3 and the intersection C5 as a changed position P32, a changed position P33 and a changed position P34, respectively.

Alternatively, when the estimation accuracy becomes low at the intersection C2 and the intersection C3 as in the example 2, the specifying unit 115 specifies the intersection C5 as the changed position P34.

As described above, the specifying unit 115 specifies the changed position in accordance with a result of route search. It is thereby possible to adequately display the subject vehicle position, and a user can easily keep track of the subject vehicle position.

### (Example 4 of Changed Position)

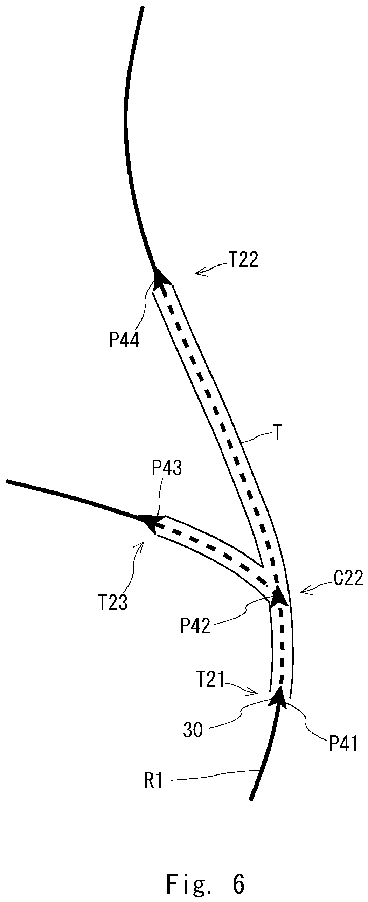

Fig. 6 shows the case where a tunnel T has a branch point C22. In the following description, the entrance of the tunnel T is an entrance T21, one exit is an exit T22, and the other exit is an exit T23. The exit T22 is an exit when going straight through the branch point C22, and the exit T23 is an exit when turning left at the branch point C22. As described in the first embodiment, GPS signals cannot be received in the tunnel T, and therefore the estimation accuracy of the current position becomes low.

In the example 4, because the branch point C22, which is a position where a user can determine the subject vehicle position, exists in the tunnel where the estimation accuracy is low, the specifying unit 115 specifies a changed position P42 as the changed position. For example, the estimation accuracy becomes low when the vehicle has passed through the entrance T21 of the tunnel T. In this case, the branch point C22 is specified as the changed position P42. The icon 30 that has been displayed at a display position P41 is thereby displayed at the changed position P42.

After the specifying unit 115 specifies the changed position P42 and displays the icon 30 at the changed position P42, when it is assumed that the vehicle has reached the branch point C22, the specifying unit 115 needs to specify the changed position in the direction the subject vehicle is heading, which is either the changed position P43 or the changed position P44. For example, in the case where route search is done and route setting is made, the changed position is specified based on the set route. For example, in the case where a route that goes straight through the branch point C22 and comes out through the exit T22 is set, the icon 30 is displayed at the changed position P44 after being displayed at the changed position P42.

The timing to display the icon 30 at the changed position P44 after displaying the icon 30 at the changed position P42 in the tunnel T is when the subject vehicle position is assumed to be in close proximity to the branch point C22. The close proximity means that the subject vehicle position is assumed to be immediately before the branch point C22 or the subject vehicle position is assumed to have passed through the branch point C22.

The assumption that the subject vehicle position is in close proximity to the branch point C22 is, for example, made by calculation in the specifying unit 115 based on transition of position information per unit time immediately before passing through the entrance T21 acquired by the position information acquisition unit 111 and distance information between the entrance T21 and the branch point C22 acquired from the map information acquisition unit 114.

Further, when the icon 30 is displayed at the branch point C22, the display unit 150 may display a button, an icon or the like to determine the moving direction. Then, a user may input the moving direction at the branch point C22 by performing operation input on the operating unit 130 such as a touch panel. When a user makes an input indicating going straight, the display unit 150 changes the display of the icon 30 from the changed position P42 to the changed position P44. When, on the other hand, a user makes an input indicating turning left, the display unit 150 shifts the display of the icon 30 from the changed position P42 to the changed position P43. As a matter of course, the moving direction may be input by means of voice input. The specifying unit 115 may specify the changed position based on operation input by a user.

Further, in the case where the navigation device 100 is equipped with an acceleration sensor, the specifying unit 115 may specify the changed position based on acceleration. For example, when the navigation device 100 is a smartphone equipped with an acceleration sensor, the acceleration sensor detects acceleration. Then, the specifying unit 115 determines whether the vehicle has gone straight through or has turned left at the branch point C22 in the tunnel T in accordance with the acceleration. The specifying unit 115 specifies the changed position in accordance with the direction the vehicle is heading.

For example, when acceleration to the left becomes equal to or higher than a threshold in a specified period of time before and after the subject vehicle position is assumed to be in close proximity to the branch point C22, the specifying unit 115 determines that the vehicle has turned left at the branch point C22 and thereby specifies the changed position P43. On the other hand, during a period of time when leftward acceleration of equal to or higher than a threshold is not detected, the specifying unit 115 determines that the vehicle has gone straight through the branch point C22 and thereby specifies the changed position P44. In this manner, the specifying unit 115 may specify the changed position based on acceleration.

As described in the above embodiments, all or some of branch points and tunnel exits are registered in map information as candidates for the changed position. Then, the specifying unit 115 specifies the changed position from the candidates for the changed position in accordance with the travel road and the moving direction based on the subject vehicle position in the state where the estimation accuracy is high. When the estimation accuracy becomes low, the display control unit 116 displays the icon indicating the subject vehicle position at the changed position.

The display control unit 116 may display the icon at the changed position immediately after the estimation accuracy becomes low. Alternatively, the display control unit 116 may display the icon at the changed position after a certain delay time. Specifically, the display control unit 116 may display the icon at the changed position when a period of time where the estimation accuracy remains low has reached a certain length. When the estimation accuracy becomes high, the icon is displayed at the subject vehicle position acquired by the position information acquisition unit 111.

This prevents a sudden change of the icon position when the estimation accuracy becomes high. It is thereby possible to adequately display the subject vehicle position, and a user can promptly keep track of the subject vehicle position. For example, even when there is a branch point immediately after the exit of a tunnel, a user can drive without confusion. Further, the changed position may be in close proximity to a tunnel exit or a branch point, and it does not need to completely coincide with a tunnel exit or a branch point. The navigation device is not limited to one used for automobiles, and it may be one used for bicycles or motorbikes.

The plurality of examples described above may be appropriately combined. For example, the changed position may be shifted in accordance with a time when the estimation accuracy is low while going through high-rise buildings.

Further, elements that are shown as functional blocks for performing various kinds of processing in the above-described embodiments may be configured by a CPU, a memory or another circuit as hardware or may be implemented by a program loaded to a memory or the like as software. It would be thus obvious to those skilled in the art that those functional blocks may be implemented in various forms such as hardware only, software only or a combination of those, and not limited to either one.

Further, the above-described program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

This application is based upon and claims the benefit of priority from Japanese patent application No. 2018-94327 filed on May 16, 2018 and No. 2018-94328 filed on May 16, 2018, the disclosure of which is incorporated herein in its entirety by reference.

### Industrial Applicability

The present disclosure is applicable to a navigation device.

### Reference Signs List

- 100: NAVIGATION DEVICE
- 110: CONTROL UNIT
- 111: POSITION INFORMATION ACQUISITION UNIT
- 112: ESTIMATION ACCURACY DETERMINATION UNIT
- 113: OPERATION RECEPTION AND CONTROL UNIT
- 114: MAP INFORMATION ACQUISITION UNIT
- 115: SPECIFYING UNIT
- 116: DISPLAY CONTROL UNIT
- 120: GPS DEVICE
- 130: OPERATING UNIT
- 140: STORAGE UNIT
- 150: DISPLAY UNIT

## Claims

1. A navigation device comprising:
a position information acquisition unit configured to acquire a position of a subject vehicle based on a positioning signal from a satellite;
an estimation accuracy determination unit configured to determine whether estimation accuracy of the position of the subject vehicle in the position information acquisition unit is low;
a specifying unit configured to specify a changed position based on a travel road and a moving direction of the subject vehicle on map information, the changed position being a temporary current position in the moving direction of the subject vehicle; and
a display control unit configured to change a display position of the subject vehicle on the map information so as to indicate the changed position when it is determined that the estimation accuracy is low.

2. The navigation device according to Claim 1, wherein the specifying unit specifies a position where a user can determine a subject vehicle position on a map as the changed position based on a travel road and a moving direction of the subject vehicle on map information, the changed position being the temporary current position.

3. The navigation device according to Claim 1, wherein the specifying unit specifies a position where the estimation accuracy is expected to become high as a changed position based on a travel road and a moving direction of the subject vehicle on map information, the changed position being the temporary current position.

4. The navigation device according to Claim 2 or 3, wherein, when the subject vehicle is going through a tunnel, the specifying unit specifies an exit of the tunnel as a changed position, the changed position being the temporary current position.

5. The navigation device according to Claim 2 or 3, wherein the specifying unit specifies a next branch point on a travel road of the subject vehicle as a changed position, the changed position being the temporary current position.

6. A navigation device control method comprising:
a step of acquiring a position of a subject vehicle based on a positioning signal from a satellite;
a step of determining whether estimation accuracy of the position of the subject vehicle is low;
a step of specifying a changed position being a temporary current position in a moving direction of the subject vehicle based on a travel road and a moving direction of the subject vehicle on map information; and
a step of changing a display position of the subject vehicle on the map information so as to indicate the changed position when it is determined that the estimation accuracy is low.

7. A program causing a computer to execute:
a step of acquiring a position of a subject vehicle based on a positioning signal from a satellite;
a step of determining whether estimation accuracy of the position of the subject vehicle is low;
a step of specifying a changed position being a temporary current position in a moving direction of the subject vehicle based on a travel road and a moving direction of the subject vehicle on map information; and
a step of changing a display position of the subject vehicle on the map information so as to indicate the changed position when it is determined that the estimation accuracy is low.
